(19) Europäisches Patentamt / European Patent Office / Office européen des brevets

(11) **EP 1 933 168 B1**

(12) **EUROPEAN PATENT SPECIFICATION**

(45) Date of publication and mention
of the grant of the patent:
**11.09.2013 Bulletin 2013/37**

(51) Int Cl.:
*G01S 17/36* (2006.01)   *G01S 17/89* (2006.01)
*A01J 5/003* (2006.01)   *A01J 5/017* (2006.01)
*A01J 7/02* (2006.01)

(21) Application number: **07076049.1**

(22) Date of filing: **05.12.2007**

(54) **Implement for automatically milking an animal and milking system**

Einsatz zum automatischen Melken eines Tieres und Melksystem

Appareil pour la traite automatique d'un animal et système de traite

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 NL 1033070**

(43) Date of publication of application:
**18.06.2008 Bulletin 2008/25**

(73) Proprietor: **Maasland N.V.**
**3147 PA Maassluis (NL)**

(72) Inventor: **van den Berg, Karel**
**2971 VB Bleskensgraaf (NL)**

(74) Representative: **Corten, Maurice Jean F.M. et al**
**Octrooibureau Van der Lely N.V.**
**Weverskade 110**
**3147 PA Maassluis (NL)**

(56) References cited:
**EP-A- 1 253 440**   **EP-A- 1 523 882**
**WO-A-00/04763**   **WO-A-2007/104124**
**US-A1- 2004 021 057**

**Description**

The present invention relates to a self-propelled milking implement for automatically milking a dairy animal, such as a cow, comprising a frame, propelling means, navigation means, a sensor for forming an image of an observation area, such as a part of the dairy animal, for example a teat, and a milking robot with at least one teat cup and with robot control means for automatically attaching the teat cup to a teat, wherein the robot control means are operatively connected to the sensor.

NL- 1024522 discloses an autonomous milking implement, comprising a mobile, autonomous teat cup carrier robot with integrated teat cup connection. The known milking implement comprises navigation means, and a position determining means for determining the position of the teat of a cow, such as a laser sensor.

EP- 1523882A discloses a self- propelled milking implement for automatically milking a dairy animal, comprising a frame with disposed thereon propelling means, navigation means, a sensor for forming an image of an observation area such as a part of the dairy animal, for example a teat, and a milking robot with at least one teat cup and with robot control means for automatically attaching the teat cup to a teat, wherein the robot control means are operatively connected to the sensor.

A drawback of the known milking implement is that moving the robot arm with teat cups towards the teat does not always take place in a reliable manner.

The invention aims at obviating the above-mentioned drawback at least partially, or at providing at least an alternative.

This object is achieved by the invention by means of a milking implement according to claim 1.

The self-propelled milking implement for automatically milking a dairy animal, such as a cow, comprises according to the invention a frame, with disposed thereon propelling means, navigation means, a sensor for forming an image of an observation area, such as a part of the dairy animal, for example a teat, and a milking robot with at least one teat cup and with robot control means for automatically attaching the teat cup to a teat, wherein the robot control means are operatively connected to the sensor, wherein the sensor comprises a source of radiation for emitting modulated electromagnetic radiation, in particular light, a receiver device for receiving electromagnetic radiation reflected by an object in the observation area, an optical device for imaging the reflected electromagnetic radiation on the receiver device, and sensor image processing means, wherein the receiver device comprises a matrix with a plurality of rows and a plurality of columns of receivers, and wherein the sensor image processing means are arranged to determine for each of the receivers a phase difference between the emitted electromagnetic radiation and the reflected electromagnetic radiation in order to calculate a distance from the receiver to the object. The sensor is arranged to distinguish the plurality of sub-objects if the object in the observation area comprises a plurality of sub-objects, and the sensor image processing means are arranged to determine a mutual distance between two of the plurality of sub-objects. This is, for example, advantageous when navigating, because the sensor or the navigation means are then able to determine whether the milking implement can pass through between the two sub-objects. More precisely, the sensor image processing means calculate in this case the distance from the receiver to the part of the observation area imaged on that receiver. For the sake of convenience, the latter distance will be denoted hereinafter by distance from the receiver to an object in said observation area.

By using such a matrix of receivers and by determining for these receivers a distance to the dairy animal, like in this case by means of phase shifting of the emitted light, it is possible to obtain per observation a complete spatial image of, for example, the teat. This spatial image is in fact composed in one go, instead of by scanning. Moreover, it is not, or at least to a lesser extent than in the state of the art, distorted by movements of the entire dairy animal and/or its teat during the observation. Moreover, it is not necessary to move the milking robot, or a part thereof, to compose a complete image. This means that there is a greater reliability that the milking robot will be moved in the correct direction. All this will be explained hereinafter in further detail.

It should be noted that the teat cup may not only be fixedly connected to the milking implement, but may also be taken from a teat cup rack. The point is that during operation the milking implement will, of course, carry the teat cup (s) with it, because it is an autonomously propelled milking implement.

Favourable embodiments are defined in the sub-claims.

In one embodiment, the sensor image processing means are arranged to form a three-dimensional image of the observation area, in particular of an object therein. In principle, the series of measured distances may suffice, but it may be advantageous to make also a three-dimensional image, for example for visual control. In this case, the image formed is transferred to a display screen or the like. In this case, the distance may, for example, be displayed by false colours, or the image may be rotated, etc.

It should be noted that the optical device, i.e. the lens or lenses, is an optical system which casts an image of the observation area onto the receivers, and which determines from what direction measurement takes place. There may be chosen a wide or narrow angle of view of the observation area. Advantageously, the optical device comprises an adjustable optical device by means of which the angle of view can be chosen, such as a zoom optical device.

In particular, the sensor image processing means are arranged to determine repeatedly an image of the observation area, in particular of an object therein. Although it is in principle sufficient to determine once an image, three-dimensional or not, in order to perform the further control on the basis thereof, it is advantageous to perform the determination a plurality of times (successively). It is thus possible to take changing circumstances, and in particular movements of the dairy animal or the like, into account.

Below, a sensor of the milking implement according to the invention will briefly be explained in further detail. The source of radiation emits electromagnetic radiation. Preferably light is used for this purpose, more preferably infrared radiation, more preferably near- infrared (NIR) radiation. The fact is that, for this purpose, suitable LEDs can be used which are very easy to drive by means of an electrically controllable supply current, and which are, in addition, very compact and efficient and have a long service life. However, it is also possible to use other source of radiation. The advantage of (near- ) infrared radiation is that the radiation does not irritate (dairy) animals.

The radiation is modulated, in accordance with a modulation frequency which is, of course, different from and is much lower than the frequency of the electromagnetic radiation itself. The, for example, infrared light is in this case a carrier for the modulation signal. The modulation helps to determine the phase difference of emitted and reflected radiation. Preferably, the modulation is amplitude modulation.

By means of the emitted radiation, the distance is determined by measuring a phase shift of the modulation signal, by comparing the phase of the reflected radiation with the phase of reference radiation. For the latter, the emitted radiation is mostly (almost) directly passed on to the receiver, in any case with a known distance between the source and the receiver, so that the actual distance can easily be determined from the measured phase difference by applying

$$\text{Distance} = \tfrac{1}{2} \text{ x wavelength x (phase difference}/2\pi),$$

wherein the wavelength is that of the modulation signal. Note that the above relation does not make allowance for unique determination of the distance which results from the fact that a phase difference, due to the periodicity, may be associated with a distance A, but also with A + n x (wavelength/2). For this reason, it may be sensible to choose the wavelength of the amplitude modulation in such a manner that the distances which occur in practice are indeed uniquely determined.

Preferably, a wavelength of the amplitude modulation of the emitted radiation is between 1 mm and 5 m. Hereby, distances can be uniquely determined up to a maximum distance of between 0.5 mm to 2.5 m, which is associated with a modulation frequency of between 300 MHz to 60 kHz, which can be readily achieved in electric circuits for driving LEDs. It should be noted that it is also possible to choose even smaller or larger wavelengths, if desired. It is advantageous, for example, to choose the wavelength in dependence on the expected to be determined distance. For example, in the milking preparation phase that distance will often be between 10 cm and 60 cm, so that a preferred wavelength range will be between 20 cm and 120 cm, and consequently a preferred frequency range will be between 1.5 MHz and 250 kHz.

In a preferred embodiment, a wavelength is adjustable, in particular switchable between at least two values. This provides the possibility of performing, for example, first a rough measurement of the distance, by means of the large modulation wavelength. For, this wavelength provides a reliable measurement over great distances, albeit with an inherent lower resolution. Here, it is assumed for the sake of simplicity that the resolution is determined by the accuracy of measuring the phase, which can be measured, for example, with an accuracy of y%. By first measuring with the large wavelength it is possible to measure the rough distance. Subsequently, it is possible to perform, with a smaller wavelength, a more precise measurement, wherein the unique determination is provided by the rough measurement.

For example, first a measurement is performed with a wavelength of 2 m. The accuracy of the phase determination is 5%. The measured phase difference amounts to (0.8 x $2\pi$) $\pm$ 5%. The measured distance then amounts to 0.80 $\pm$ 0.04 m. The next possibility would be 1.80 $\pm$ 0.04 m, which, however, is excluded on the basis of the expected distance. Subsequently, measurement is performed with a wavelength of 0.5 m. The measured phase difference 0.12 x $2\pi$ modulo $2\pi$, and again with $\pm$5%. This means that the distance amounts to 0.12 x 0.25 modulo 0.25, so 0.03 modulo 0.25 m. As the distance should moreover amount to 0.80 $\pm$ 0.04, the distance should be equal to 0.78 m, but now with an accuracy of 0.01 m. In this manner the accuracy can be increased step by step, and the different modulation wavelengths can be chosen on the basis of the accuracy of the previous step.

Advantageously, the sensor, at least a provided sensor control, is arranged to automatically adjust the wavelength or, of course, the frequency, to the determined distance. This makes it possible to determine the distance more accurately in a next step.

It is also advantageous, for example, first to determine roughly the position/distance with a large wavelength, and subsequently to determine the speed from the change of position, which can indeed be uniquely determined from the change of the phase difference, and then preferably measured with a smaller wavelength.

In a preferred embodiment, the source of radiation emits radiation in a pulsed manner, preferably with a pulse frequency of between 1 Hz and 100 Hz. Here, the pulse length is preferably not more than ½ part, more preferably 1/n part of a pulse period. This provides radiationless pauses between the pulses, which may be used for other purposes, such as data transmission. For this purpose, the same source of radiation could then be used for example, but now with a different transmitter protocol; however, no measurement nevertheless being suggested or disturbed by the sensor. Additionally, it is possible to operate a different source of radiation and/or sensor in the pauses, in which case mutual interference neither takes place.

Preferably, the source of radiation has an adjustable light intensity and/or an adjustable angle of radiation. This provides the possibility of adapting the emitted radiation intensity or the emitted amount of radiation energy to the light conditions, which may result in energy saving. In the case of a short distance and a strong reflecting capacity, for example, less radiation is required than in the case of a great distance and a relatively strong absorbing capacity, of, for example, a dark animal skin or the like. It is also possible to adapt the angle of radiation to the angle of view of the sensor, because the radiation angle of view need not be greater than that angle of view. It may be advantageous, for example, when navigating through a space, to choose a great angle of radiation, such as for example between 80° and 180°, because the angle of view used in that case will often be great as well. On the other hand, when 'navigating' on a teat or the like, the angle of radiation may also be chosen smaller, such as for example between 30° and 60°. Of course, other angles of radiation are possible as well.

In a particular embodiment, the receiver device, and advantageously also the source of radiation, is disposed rotatably. This provides the advantage that for efficient navigation not the entire milking implement, but only the receiver device and, possibly, also the source of radiation, has to be rotated. The milking implement then 'looks about' as it were. This is in particular advantageous if the angle of view, and possibly also the angle of radiation, is relatively small, in order to ensure in this manner a relatively high resolution. However, it is also possible, of course, to dispose the receiver device and the source of radiation rigidly, for the purpose of a greatest possible constructional simplicity.

In a special embodiment, the sensor comprises receivers that are positioned in such a way that the sensor has an observation area with an angle of view of at least 180°, preferably of substantially 360°. In this case, it is possible to use either a single ultra wide-angle lens ('fisheye') to cast the image on the sensor, but it is also possible to use a sensor with a plurality of (image) surfaces, and associated lenses, or in other words a sensor with a plurality of sub-sensors, which comprise each a plurality of rows and columns of receivers. The advantage of this embodiment is that it is capable of overlooking in one go the complete field of view to move in one direction, and even of observing a complete around-image. It is obvious that this is particularly favourable for navigating and guiding.

In a particular embodiment, an angle of view of the observation area of the sensor is adjustable. The angle of view may then be chosen, for example, in accordance with the observation object or area. It is advantageous, for example, when guiding to a teat, to choose the angle of view as a small one, with a corresponding higher resolution. It may also be advantageous to keep disturbing radiating objects, such as hot objects, away from the observation area by advantageously choosing the angle of view. For this purpose, it is possible, for example, to dispose an objective (lens) with variable focal distance (zoom lens') in front of the sensor. It is also possible only to select a limited area of the receivers of the sensor. This is comparable with a digital zoom function.

Advantageously, at least a part of the sensor, in particular a source of radiation and/or the receiver device, is resiliently suspended from the frame. An advantage thereof is that a dairy animal such as a cow will less quickly get injured by the sensor which, of course, often projects to some extent, and thus forms a risk for legs and the like. On the other hand, the source of radiation and/or the receiver device is thus better protected from jolts caused by, for example, the same legs.

In a favourable embodiment, the navigation means are operatively connected to the sensor, in particular to the sensor image processing means, and more in particular the navigation means comprise the, sensor. As already pointed out now and then in the foregoing, the present invention cannot only be applied for, for example, teat detection and teat cup guiding, but also, for example, to guide the milking implement as a whole to, for example, a dairy animal, a recharging point, etc. It is then possible for the navigation means to receive information via the sensor, in order to be able to map out a route.

In particular, the sensor image processing means are arranged to recognize at least one of a teat cup, an udder, a teat and a leg of the dairy animal. If such recognition means are incorporated in the sensor image processing means, or, of course, in a control device operatively connected thereto, the milking implement is very well able to find in an efficient manner its way to the dairy animal, the udder and/or the teat thereof, in which case it is possible to attach the teat cup. It goes without saying that such a device, which is able to attach independently, is very economical. Such image recognition means are, incidentally, known in the state of the art, and will not be explained here in further detail:

It should be noted that the laser scanner of NL-1024522 is not described in further detail in that document. However, it is known from practice that the directional position of a teat is determined by means of a laser scanner. Furthermore, the position of the teat cup is assumed as fixed on the teat cup carrier, from which the position difference is then determined. However, it may occur that the teat cup is not present on the teat cup carrier in the correct position, for example by incorrect positioning or because a cow pushes a leg against the teat cup. In that case, the position difference is not correctly determined.

Additionally, EP- A1- 0, 360, 354 discloses an implement for automatically milking a cow, which is provided with a robot arm comprising a sliding element. On the sliding element- there are provided sensor means which determine in each case a position of the next teat to which a teat cup has to be attached. Said sensor means comprise a laser, a mirror, a lens, and a receiver. The laser emits light that is partially reflected by the teat. Via the mirror the reflected light is led to the lens that displays the light on the receiver. The sensor is capable of rotating about a vertical axis, so that the laser performs a scanning movement. Sensor electronics are connected to the receiver. The sensor electronics are capable of determining the distance and the angle of the teat relative to the sensor on the basis of a signal from the receiver and on the basis of the momentary angle of the sensor at the moment when the latter receives a signal. Because of the scanning movement information regarding the position of the teat is obtained in each case along one (in practice horizontal) line. In order to obtain also information regarding the vertical position, the robot arm with the scanner as a whole performs a vertical movement. On the basis of the distance information thus obtained, the robot arm is moved to the teat. Also this position determining device described in further detail has the above- described drawback.

In a special embodiment of the milking implement according to the invention, the sensor image processing means are arranged to determine a distance from the sensor to a leg of a dairy animal, in particular a hind led of a cow. Such an implement is then able to navigate on that cow, in order to place the milking implement in a proper initial position for connecting it, at least the teat cup(s) thereof, to the cow.

If the object in the observation area comprises a plurality of sub-objects, the sensor is arranged to distinguish the plurality of sub-objects, that is to say to recognize and process a plurality of sub-objects in one image. This may be distinguished, for example, because in the group of points from which radiation is reflected there is a discontinuously changing distance between at least a first group of points and a second group of points. However, these techniques are known per se in the state of the art, so that this will not be set out here in further detail.

An example has already been described and consists in that, in one image, both a part of a dairy animal and a teat cup are recognized. As other examples may be mentioned, for example, a plurality of objects to navigate to or between, such as legs of a cow. In particular in this case, it is convenient that the image is three-dimensional, so that it is possible to make a spatial representation of the "found objects" in the image. For example, a two-dimensional image of partitions which are in a staggered position relative to each other and which overlap each other might indeed be recognized as a zsurmountable obstacle by a 3D-sensor and not be recognized as such by a 2D-sensor.

In a special embodiment, the sensor image processing means are arranged to calculate, from an image of the observation area, the position and/or the mutual distance between the teat cup and the teat, and the robot control means are arranged to control the milking robot on the basis of the calculated position and/or the mutual distance. In this embodiment, the sensor image processing means determine the position and/or the distance of the components that are relevant to the milking, namely the teat cup and the teat to which the latter has to be attached. On the basis thereof it is possible for the robot control means to determine the route to be followed in order to actually achieve the connection between the teat cup and the teat.

In a favourable embodiment, the sensor image processing means are arranged to determine repeatedly, from an image of the observation area, a position and/or a mutual distance of the teat and the teat cup. It is sufficient per se to determine only once the relevant position and/or the mutual distance of the teat and the teat cup. However, it is advantageous to do this repeatedly, because the milking implement is thus able to anticipate, for example, unforeseen changes, such as a dairy animal that moves, so that the teat position will change. Therefore, the milking implement according to this embodiment is able to follow the dairy animal very efficiently in the case of such movements. In the state of the art, this was realized, for example, by means of pushing a plate against the rear end of the dairy animal, and by determining a relative position of the teat by interconnecting the milking robot and the plate. This is less accurate.

In a special embodiment, the sensor image processing means are arranged to calculate, from a change of the position and/or the mutual distance, the speed of the teat cup relative to the teat, and the robot control means are arranged to control the milking robot on the basis of the calculated speed. By also taking the speed into account, the milking robot will be able to bring the teat cup to the teat even more efficiently, and follow movements of the dairy animal.

In a particular embodiment, the robot control means are arranged to control and/or to minimize the mutual distance between the teat and the teat cup. This is an efficient measure to attach the teat cup to the teat, which measure can easily be realized in the robot control. Incidentally, it is emphasized here that a situation is possible in which the sensor image processing means and the robot control means, and, if desired, even the navigation means, are not all mutually connected, but may even comprise in fact one and the same computer or other processing unit. In other words, in this embodiment and in all other embodiments disclosed here, the milking implement may comprise a separate control device which may be connected to one or more of the sensor image processing means, the navigation means and the robot control means. However, the control device may also be a not further mentioned or elaborated component of one of these three means.

In a special embodiment, the milking implement is arranged for dairy animal recognition. The milking implement is thus able to select also in a group of dairy animals a particular dairy animal and to navigate on this animal. For this purpose, the milking implement comprises, for example, the sensor image processing means, optical or other image recognition means that are known per se in the state of the art. For example, an image of a cow, or a part thereof, such as a head or a fur pattern, may be compared with a stored reference image. On the other hand, it is also possible, for example, to make use of a transmitter/receiver combination, a transponder in an earmark with a reader in the milking implement, etc.

A particular embodiment further comprises a cleaning device, wherein the robot control means are .arranged to control the cleaning device in order to clean an udder and/or at least one teat of the dairy animal on the basis of an image of the udder and/or the teat of the dairy animal and/or on the basis of an image of the cleaning brushes. It is thus possible for the cleaning device to clean very efficiently the relevant udder and/or teat, and the milking implement is even more autonomous.

In a special embodiment, the milking implement further comprises at least one of a connection for electric power supply, a connection for milk yield, a connection for discharge of waste, in particular of a waste liquid, more in particular of rejected milk, consumed washing and/or disinfecting liquid, and a connection for a liquid, in particular a washing or disinfecting liquid, wherein the sensor image processing means are arranged to couple the connection to a counter-connection for that connection, by recognizing the connection and the counter-connection and minimizing the mutual distance between the connection and the counter-connection. It is thus possible for such a milking implement to perform even , more functions without the intervention of an operator. In this case, the coupling of the connection to the counter-connection may comprise steps that are comparable with the steps for attaching the teat cup to the teat. This means that the milking implement comprises control means, connected to the sensor image processing means, that minimize on the basis of the image of the connection and the counter-connection the distance there between, in order thus to realize the coupling. In this case, the connection and/or the counter-connection are preferably self-searching.

The invention also provides, according to claim 23, a milking system comprising at least one milking parlour and a plurality of self-propelled milking implements according to the invention. A milking parlour need comprise little more than a place or area to milk a dairy animal. A milking parlour for a single dairy animal is in principle already sufficient. Also in that situation, two or more milking implements may advantageously be provided in the system, in which case, for example, one of the milking implements performs the milking while another one discharges the collected milk etc. at a discharge station or the like. In the case of a system comprising a plurality of milking parlours, it is, of course, advantageous, but not required, to provide a plurality of milking implements which, for example, are able to milk simultaneously. Additionally, the milking parlour may, for example, comprise a feeding device in order to entice a dairy animal, etc.

In a favourable system according to the invention, each milking implement comprises a receiver device that is sensitive to electromagnetic radiation with an own frequency, and advantageously also a light source which is capable of emitting electromagnetic radiation with that own frequency. It is thus possible for the plurality of milking implements to operate independently of each other, without disturbing each other. In this case, there may advantageously be used electromagnetic radiation with an own carrier frequency, which means that the frequency of the radiation itself is different for each milking implement. For this purpose, there are provided, for example, different sources of radiation which may comprise, for example, a lamp with a filter, or different LEDs, and there are also provided associated receiver devices that may also be equipped, if desired, with associated filters. Alternatively, it is also possible to choose milking implements wherein an individual sensor uses one or more own modulation frequencies. If, in that case, the receiver device and/or the sensor image processing means are arranged to process in particular only said own modulation frequencies, it is still possible to use a type of a source of radiation, for example the same type of IR-LED or the like, in which case only the control of the source of radiation has to be adapted accordingly. A suitable type of receiver device/sensor image processing means is, for example, a lock-in amplifier or a phase-sensitive amplifier.

In one embodiment, the system further comprises a master and one or more slaves which are controlled, in particular synchronized, by the master. In this case, for example, a separate device, which is either fixed or mobile, is equipped as a master, and the milking implements are equipped as slaves. It is also possible to equip one milking implement as a master, and the other milking implements as slaves. A master may, for example, be equipped with a transmitter/receiver and a control device, while the slaves are only equipped with a transmitter/receiver. It is then possible for the master to transmit to or to receive from a slave one or more signals, and thus to control that slave.

In particular, it is thus possible to use a single type of light source in the whole system. In this case, distances and the like are still determined as described in the foregoing, but it is determined by the master which milking implement is due to do that, because the master transmits, for example, instruction signals by means of the same radiation, which might also take place by remote control. The instructions of the master thus determine which of the milking implements is sensitive to the electromagnetic radiation used. It is also possible, of course, to use for the control and the sensor measurements different radiation, such as, for example, optical radiation with another frequency or radio radiation or the already mentioned electromagnetic radiation.

In a particular embodiment of the system, the milking implements are arranged to emit the electromagnetic radiation in pulses with a pulse frequency with a pause window in between, wherein each milking implement emits a pulse during respective pause windows of the other milking implements. In this case, each pulse lasts preferably not more than the 1/2 part, more preferably not more than 1/(the number of milking implements in the milking system) part of a period of the pulse frequency. In this embodiment, there may be used a single type of electromagnetic radiation, and even a single type of modulation frequency, apart from adaptations for, for example, another distance or distance measurement accuracy. For, the master may effect that a milking implement will emit a pulse signal in certain time spans, and that another milking implement will emit its pulse signals in each case in the pauses in between. The different milking implements may also function without influencing each other.

In a special embodiment, the system further comprises a counter-connection for the connection, and advantageously also at least one container for a liquid, in particular a washing or disinfecting liquid, milk or waste, in particular a waste liquid, more in particular rejected milk or consumed washing and/or disinfecting liquid. It is then possible for a milking implement suitable for this purpose according to the invention to make a coupling between the connection and the counter-connection, and possibly as a result thereof to the at least one container for liquid. The milking implement may then supply and/or receive liquid, and then continue to milk a next dairy animal.

The invention will now be explained in further detail with reference to exemplary embodiments shown in the accompanying figures, in which:

Figure 1 is a diagrammatic side view of a milking implement according to the invention;
Figure 2 is a diagrammatic view of a detail of a milking implement according to the invention, with a sensor;
Figure 3 is a diagrammatic side view of a part of an implement according to the invention, during operation;
Figure 4 is a diagrammatic plan view of a milking system according to the invention.

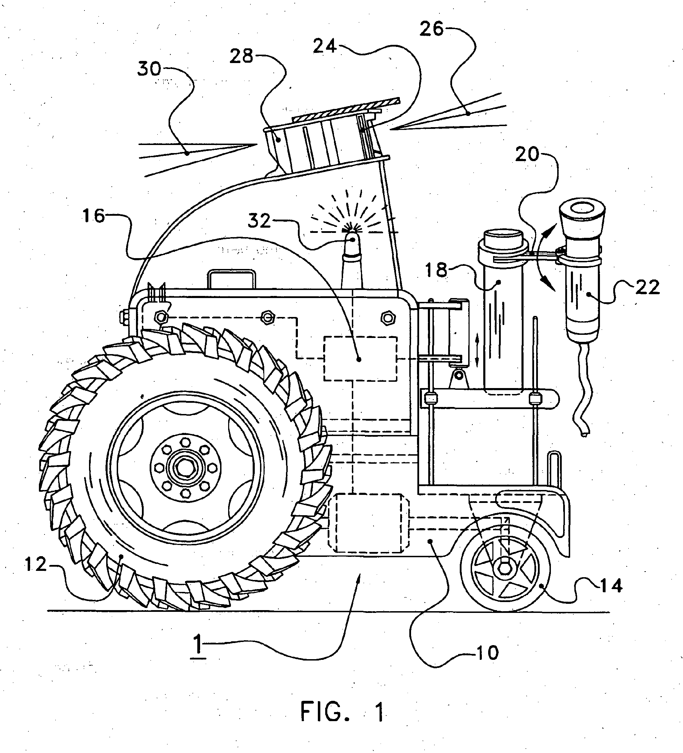

The milking implement shown in a diagrammatic side view in Figure 1 is generally denoted by the reference numeral 1. It comprises a frame 10 with rear wheels 12 and front wheels 14, and with a control device 16. A teat cup displacing element 18 with a teat cup gripper 20 and a teat cup 22 is disposed on the frame 10. There are further provided a first sensor 24 which emits a first light beam 26, as well as a second sensor which emits a second light beam 30, as well as a communication device 32.

The milking implement 1 is self-propelled, i.e. autonomously displaceable, by means of wheels 12 and/or 14 driven by a not shown drive. The control of the drive is preferably connected to the sensor image processing means and/or navigation means that are not separately depicted here. In fact, it is advantageous, for reasons of compactness, to combine both the sensor image processing means and the navigation means, robot control means (neither shown) and other control means, if any, in the control device 16 which comprises, for example, a PC or comparable device.

The teat cup displacing element 18 is shown here in a very simple embodiment, with a teat cup gripper 20 and a teat cup 22. Further details relating thereto may be found in NL-1024522 or equivalents thereof, so that they will be set out here only briefly. The teat cup may be displaced in vertical direction, as well as be rotated, if desired, about at least a horizontal axis, in order to attach the teat cup 22 in an optimum manner to a teat: In order to control the attachment process, the milking implement 1 uses the 3D-sensor 24, 28, as will be set out hereinafter in further detail. It should be noted that the teat cup 22 may also be provided in a separate teat cup rack and may be taken therefrom by the milking implement 1.

The shown teat cup displacing element 18 may in practice also relate to a robot arm or other teat cup attaching device, details of which will be known to the person skilled in the art, and may, for example, be found in, for example, EP 0 862 360 or EP 1 442 657.

The first sensor 24, at least a not separately shown light source thereof, emits a first light beam 26. The first observation area of the first sensor 24 substantially corresponds to the solid angle in which the first radiation beam 26 is emitted, but may also be smaller. Likewise, a not separately shown light source in the second sensor 28 emits a second light beam 30, and the second observation area will roughly correspond to the solid angle in which the second light beam is emitted.

The first observation area, which, incidentally, is indicated only very schematically in the figure, will be used in practice to control the teat cup displacing element 18, and, if desired, to navigate in an area in front of the milking implement 1. It will be possible to use the second observation area to be able to navigate in an area behind the milking implement 1.

The communication device 32 may be used for communication with an external PC, data storage, etc. For this purpose, there may be used radio signals, optical signals, and the like. For example, the image produced by means of the first and/or the second sensor may be sent to a control panel. The communication device may also serve to emit a warning signal, for example in the case of an operational failure. The signal may, for example, be visible and/or audible. Additionally, the communication device 32 may be used as a master or slave in a system according to the invention, wherein a plurality of milking implements 1 are provided which should be able to operate crisscross and simultaneously.

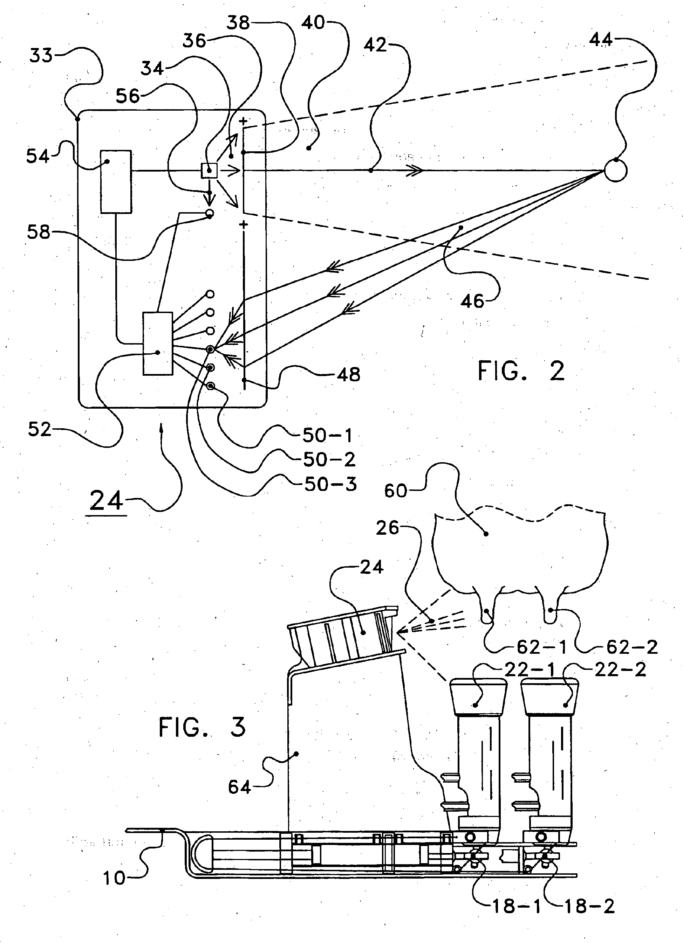

Figure 2 is a diagrammatic view of a detail of a milking implement according to the invention during operation, with a sensor 24.

The sensor 24 comprises a housing 33 with a light source 34 that emits light 36 which is formed by the exit optical device 38 into an outgoing beam 40. A first ray 42 thereof hits an object 44 and is reflected as a reflected beam 46 which is displayed, via the entrance optical device 48, on a number of receivers 50-1, 50-2, 50-3, .... The signals from those receivers are processed by the sensor image processing device 52 which is connected to the sensor control 54. The sensor control 54 is also connected to the light source 34 which also emits a reference ray 56 to the reference receiver 58.

The housing 33 is, for example, a moisture-proof and dust-proof housing of shock-proof synthetic material or metal, which may be fastened to the milking implement in a resilient or otherwise shock-absorbing manner. The housing 33 comprises a front side. At the front side there is included an exit optical device 38 which forms light 38 from one or a plurality of light sources 34 into a desired outgoing beam 40. The outgoing beam need not be wider than the desired observation area, and preferably corresponds thereto. For this purpose, the exit optical device 38 may advantageously be an adjustable or even a zoom lens.

In this embodiment, the light source 34 comprises infrared light emitting diodes (IR-LEDs), but may also comprise other colours of LEDs, or a laser diode, etc. It should be noted that everywhere in this document the term 'light' is used, but that this may generally be read as 'electromagnetic radiation'. The light source 34 is connected to the sensor control 54 which, for example, applies an amplitude modulation signal over the control current of the IR-LEDs of light source 34, or otherwise effects a modulation of the light 36. An exemplary modulation frequency is, for example, 100 kHz, but this may be chosen within very wide margins, and even be adjustable. Incidentally, there may also be provided a separate light source control, which may be connected itself to the sensor control 54, or a general control device 16. The light intensity of the light source 34 may be adjusted within associated limits, for example, by increasing the supplied power.

There may be provided a not shown power supply for the light source 34, for the sensor 24, and even for the milking implement as a whole. It should be noted that neither the power supply, nor any of the sensor control 54, the sensor image processing 52 to be described hereinafter, or even the light source 34, need be provided in the sensor 24, but may, for example, also be provided elsewhere on the milking implement. The connections may be wired or wireless connections.

In a variant, the exit optical device 38 is provided on the inner side of the front side, the front side being made from a material which is transmissible for the emitted light. In this manner the exit optical device 38, and in general the interior of the sensor 24, is protected from external influences, while a flat front side of synthetic material can easily be cleaned.

In the outgoing beam 40, or in many cases in the observation area, there is an object 44, such as a cow's leg or the like, which is irradiated by a first ray 42. The object 44 will partially reflect that first ray 42 in a reflected beam 46. Only a small part thereof is depicted, which is formed into an image by the entrance optical device 48. The entrance optical device 48 may also effect an adaptation of the image to the desired observation area or vice versa, and may be designed for this purpose, for example, as an adjustable lens or even as a zoom lens.

In the housing 33 there is further included a place- sensitive receiver device, such as a CMOS or a CCD or the like. The receiver device comprises a matrix with a plurality of rows and columns of receivers 50- 1, 50- 2, 50- 3, ..., in the form of photodiodes or other light- sensitive elements. In an exemplary embodiment, this is a matrix of 64X64 photodiodes, but resolutions of 176X144, 640X480, and other, smaller or larger, matrices are likewise possible. For the sake of clarity, only a very small number of receivers, and only in one single row, are depicted in Figure 2. Here, the reflected beam 46 is found to be displayed on the receiver 50- 3; which will supply a signal. It will be obvious that, if, for example, the object 44 is larger, or the resolution of the sensor 24 is greater, there will be per object 44 a plurality of receivers 50- 1, ..., which will supply a signal. This is also the case if a plurality of objects 44 are present in the observation area.

Consequently, in the depicted case, (only) the receiver 50- 3 supplies a signal, from which a phase can be determined by means of known techniques, such as sampling at four points, at a known frequency. For this purpose, the sensor image processing device 52 may, for example, be equipped with suitable circuits. The sensor control 54 may also be equipped for this purpose.

This phase is compared with the phase of a reference ray 56 which is transmitted to and received by a reference receiver 58. It is not relevant whether the latter is located immediately next to the light source 34, as long as the optical path length, and consequently the acquired phase difference of the reference ray 56, between the light source 34 and the reference receiver 58, is known.

For each receiver 50- 1, ..., there is determined, from the phase difference between the reference ray 56 and the beam reflected on the receiver, a distance with the known relation between wavelength and phase difference. This is done in principle substantially parallel and simultaneously for each of the receivers 50- 1, ... There is thus created a 2D collection of distances, from which a spatial image of the observed object 44 can be formed.

If necessary, the measurement is also performed at one or more other modulation wavelengths, in order to achieve a unique determination in distance, or an increased accuracy. If desired, it is also possible to repeat the measurement at one and the same modulation wavelength, for example for an increased reliability, to take changes in the observation area into account, such as movement, or even to determine a speed of an object 44 in that observation area, by measuring the change of a distance. For this purpose, the sensor control 54 may be arranged in a simple manner. A favourable repeat speed is, for example, at least 16 Hz, because it is thus possible to display movements sufficiently flowing, at least for human beings. For higher accuracy of control, a higher repeat speed, such as 50 Hz or 100 Hz is even better. Other repeat speeds, such as for example 1 Hz to 2 Hz, are possible as well.

In a particular embodiment, short light pulses may be emitted by the light source 34, provided that each light pulse comprises at least one whole wave, preferably two or more waves, of the modulated signal. At the modulation frequencies occurring in practice, this can easily be realized.

Figure 3 is a diagrammatic side view of a part of an implement according to the invention, during operation.

Here, a frame 10 comprises a first and a second teat cup displacing element 18- 1 and 18- 2, respectively, with first and second teat cups 22- 1 and 22- 2, respectively. These are directed to first and second teats 62- 1 and 62- 2, respectively, navigated by means of the first sensor 24, which emits a first light beam 26, and which is fastened by means of a resilient suspension 64.

The first sensor 24 is connected to the frame 10 by means of the resilient suspension 64, which protects both the sensor 24 and a dairy animal or other objects around the implement from collisions. This is possible because the absolute position of the sensor 24 need not necessarily be known. Of course, a rigid suspension of the sensor 24 and any other sensor that may be provided is possible as well.

The first sensor 24 emits the first light beam 26 which, in the shown case, covers both the udder 60 with teats 62- 1 and 62- 2 and the teat cups 22- 1 and 22- 2. On the basis of, for example, the image of the udder and/or the teats, it is possible for a not shown sensor image processing unit to determine which cow is concerned, whether the udder or the teats should be cleaned, whether the animal should be milked, whether there are disease symptoms, etc. Additionally, it is possible to navigate by means of the established 3D- image, in which case the implement is first manoeuvred as a whole into a favourable position relative to the udder and/or the teats, and subsequently the teat cups 22- 1, 22- 2, ..., are attached to the associated teats 62- 1, 62- 2, ... For this purpose, the distance between the relevant teat cup and teat may be determined on the basis of the 3D- image, and subsequently be minimized under feedback of the same image. Analogously, it is also possible, if desired, to realize other connections, for example between a milk supplying device (not shown) on the self- propelled milking implement and a supply to a milk container, etc.

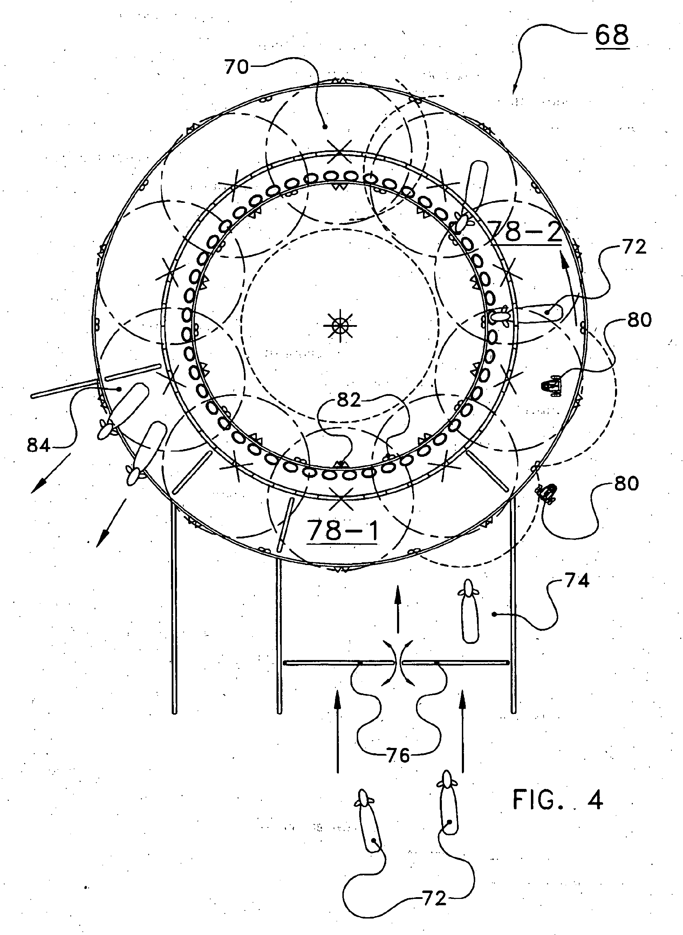

Figure 4 is a diagrammatic plan view of a milking system according to the invention, which is generally denoted by reference numeral 68. The milking system 68 comprises, for example, a rotating platform 70, access to sectors 1, 2, etc. of which is possible for cows 72 via an entrance 74 with entrance doors 76. These sectors are denoted by reference numerals 78-1, 78-2, ...

By 80 are denoted self-propelled milking implements according to the invention, and by 82 are denoted feeding places. 84 is an exit.

When cows 72 want to be milked, they will go to the milking system 68, either entirely voluntarily, or, for example, because they want to eat in feeding places 82. For this purpose, the cows 72 approach the milking system 68 and go through the entrance 74 via the entrance doors 76. On or at the entrance doors 76 or the entrance 74 there may, for example, be disposed a cow recognition system which recognizes the cows 72 and, for example, supplies information regarding the status, health, etc. of the cows 72 to be milked to the milking system or at least to the self-propelled milking implements 80. It is also possible, for example, to direct, as a standard procedure, a not occupied self-propelled milking implement which is provided with such a cow recognition system to the entrance 74 in order to wait there for a cow to be milked and to recognize her. The cow recognition system may be based on the sensor (not separately shown) or any other system, such as with earmarks or transponders.

Via the entrance 74 the cows 72 go to a feeding place 82 where they can consume a sort and amount of feed adapted or not adapted to the relevant cows. For example during eating, a self-propelled milking implement 80 may navigate to the eating cow and milk her. When navigating, the implement 80 may use, if desired, not shown orientation points in the milking system 68.

For milking there is available, for example, a period of time that depends on the rotational speed of the platform 70. The self-propelled milking implement may be completely independent, i.e. have its own milk storage, etc., or be connected via one or more hoses to an external milk storage, etc. As an alternative for a rotating platform, there may also be provided a stationary system having one or more milking places with, if desired, a feeding place.

The number of self-propelled milking implements shown amounts in this case to only two, but may amount, of course, to any other number, such as only one, but also three, four, etc.

Likewise, it will be possible for the person skilled in the art to apply other adaptations and modifications, to the above- described, non- limiting exemplary milking implements, without exceeding the scope of the invention, as defined by the appended claims.

**Claims**

**1.** self-propelled milking implement (1; 80) for automatically milking a dairy animal, such as a cow (72), comprising a frame (10), with disposed thereon
propelling means (12, 14),
navigation means,
a sensor (24, 28) for forming an image of an observation area, such as a part of the dairy animal, for example a teat (62-1, 62-2), and
a milking robot with at least one teat cup (22) and with robot control means (16) for automatically attaching the teat cup to a teat, wherein the robot control means (16) are operatively connected to the sensor (24, 28),
**characterised in that** the sensor (24, 28) comprises:
a source of radiation (34) for emitting modulated electromagnetic radiation (26, 30; 36, 40), in particular light,
a receiver device for receiving electromagnetic radiation (46) reflected by an object (44) in the observation area,
an optical device (48) for imaging the reflected electromagnetic radiation (46) on the receiver device, and
sensor image processing means (52),
wherein the receiver device comprises a matrix with a plurality of rows and a plurality of columns of receivers (50-1, 50-2, 50-3), and
the sensor image processing means (52) are arranged to determine for each of the receivers a phase difference between the emitted electromagnetic radiation (40) and the reflected electromagnetic radiation (46) in order to calculate a distance from the receiver (50-1, 50-2, 50-3) to the object (44), wherein the sensor (24, 28) is arranged to distinguish the plurality of sub-objects if the object (44) in the observation area comprises a plurality of sub-objects, wherein the sensor image processing means (52) are arranged to determine a mutual distance between two of the plurality of sub-objects.

2. Milking implement (1; 80) according to claim 1, wherein the sensor image processing means (52) are arranged to form a three-dimensional image of the observation area, in particular of an object (44) therein.

3. Milking implement (1; 80) according to claim 2, wherein the sensor image processing means (52) are arranged to determine repeatedly an image of the observation area, in particular of an object (44) therein.

4. Milking implement (1; 80) according to any one of the preceding claims, wherein a wavelength of the amplitude modulation of the emitted light (36, 40) is between 1 mm and 5 m.

5. Milking implement (1; 80) according to any one of the preceding claims, wherein a wavelength of the amplitude modulation of the emitted radiation is adjustable, in particular switchable between at least two values.

6. Milking implement (1; 80) according to any one of the preceding claims, wherein the source of radiation (34) emits radiation (26, 30; 36, 40) in a pulsed manner, preferably with a pulse frequency between 1 Hz and 100 Hz.

7. Milking implement (1; 80) according to any one of the preceding claims, wherein the source of radiation (34) has an adjustable light intensity and/or an adjustable angle of radiation.

8. Milking implement (1; 80) according to any one of the preceding claims, wherein the receiver device, and advantageously also the source of radiation (34), is disposed rotatably.

9. Milking implement (1; 80) according to any one of the preceding claims, wherein the sensor (24, 28) comprises receivers (50-1, 50-2, 50-3) that are positioned in such a way that the sensor (24, 28) has an observation area with an angle of view of at least 180°, preferably of substantially 360°.

10. Milking implement (1; 80) according to any one of the preceding claims, wherein an angle of view of the observation area of the sensor (24, 28) is adjustable.

11. Milking implement (1; 80) according to any one of the preceding claims, wherein at least a part of the sensor (24, 28), in particular a source of radiation (34) and/or the receiver device, is resiliently suspended from the frame (10).

12. Milking implement (1; 80) according to any one of the preceding claims, wherein the navigation means are operatively connected to the sensor (24, 28), in particular to the sensor image processing means (52).

13. Milking implement (1; 80) according to any one of the preceding claims, wherein the navigation means comprise the sensor (24, 28).

**14.** Milking implement (1; 80) according to any one of the preceding claims, wherein the sensor image processing means (52) are arranged to recognize at least one of a teat cup (22), an udder (60), a teat (62-1, 62-2) and a leg of the dairy animal.

**15.** Milking implement (1; 80) according to claim 14, wherein the sensor image processing means (52) are arranged to determine a distance from the sensor (24, 28) to a leg of a dairy animal, in particular a hind leg of a cow (72).

**16.** Milking implement (1; 80) according to claim 1, wherein the sensor image processing means (52) are arranged to calculate, from an image of the observation area, the position and/or the mutual distance between the teat cup (22) and the teat (62), and the robot control means are arranged to control the milking robot on the basis of the calculated position and/or the mutual distance.

**17.** Milking implement (1; 80) according to any one of claims 1, 15 or 16, wherein the sensor image processing means (52) are arranged to determine repeatedly, from an image of the observation area, a position and/or a mutual distance of the teat and the teat cup (22).

**18.** Milking implement (1; 80) according to claim 17, wherein the sensor image processing means (52) are arranged to calculate, from a change of the position and/or the mutual distance, the speed of the teat cup relative to the teat, and wherein the robot control means are arranged to control the milking robot on the basis of the calculated speed.

**19.** Milking implement (1; 80) according to any one of claims 1, 15 - 18, wherein the robot control means are arranged to control and/or to minimize the mutual distance between the teat (62-1, 62-2) and the teat cup (22).

**20.** Milking implement (1; 80) according to any one of the preceding claims, wherein the milking implement (1; 80) is arranged for dairy animal recognition.

**21.** Milking implement (1; 80) according to any one of the preceding claims, further comprising a cleaning device, wherein the robot control means are arranged to control the cleaning device in order to clean an udder (60) and/or at least one teat (62-1, 62-2) of the dairy animal (72) on the basis of an image of the udder and/or the teat of the dairy animal and/or on the basis of an image of the cleaning brushes.

**22.** Milking implement (1; 80) according to any one of the preceding claims, further comprising at least one of a connection for electric power supply, a connection for milk yield, a connection for discharge of waste, in particular of a waste liquid, more in particular of rejected milk, consumed washing and/or disinfecting liquid, and a connection for a liquid, in particular a washing or disinfecting liquid, wherein the sensor image processing means (52) are arranged to couple the connection to a counter-connection for that connection, by recognizing the connection and the counter-connection and minimizing the mutual distance between the connection and the counter-connection.

**23.** Milking system (68) comprising at least one milking parlour and a plurality of self-propelled milking implements (1; 80) according to any one of the preceding claims.

**24.** Milking system (68) according to claim 23, wherein each milking implement (1; 80) comprises a receiver device which is sensitive to electromagnetic radiation (26, 30; 36, 40) with an own frequency, not being a pulse frequency, and advantageously also a light source (34) which is capable of emitting electromagnetic radiation (26, 30; 36, 40) with that own frequency.

**25.** Milking system according to claim 23 or 24, further comprising a master and one or more slaves which are controlled by the master, in particular synchronized by the master.

**26.** Milking system according to any one of claims 23 - 25, wherein the milking implements (1; 80) emit the electromagnetic radiation (26, 30; 36, 40) in pulses with a pause window in between, wherein each milking implement emits a pulse during respective pause windows of the other milking implements (1; 80).

**27.** Milking system according to any one of claims 23 - 26, comprising a plurality of self-propelled milking implements according to claim 22, wherein the system further comprises a counter-connection for the connection, and in particular also at least one container for a liquid, in particular a washing or disinfecting liquid, milk or waste, in particular a waste liquid, more in particular rejected milk, consumed washing and/or disinfecting liquid.

**Patentansprüche**

1. Selbstfahrende Melkvorrichtung (1; 80) zum automatischen Melken eines Milchtieres wie einer Kuh (72), umfassend einen Rahmen (10), an dem angeordnet sind

   Fortbewegungsmittel (12, 14),

   Navigationsmittel,

   ein Sensor (24, 28) zum Erstellen eines Bildes eines Beobachtungsbereichs, wie eines Teils des Milchtieres zum Beispiel einer Zitze (62-1, 62-2), und

   ein Melkroboter mit wenigstens einem Zitzenbecher (22) und mit Robotersteuermitteln (16) zum automatischen Anbringen des Zitzenbechers an einer Zitze, wobei die Robotersteuermittel (16) wirksam mit dem Sensor (24, 28) verbunden sind,

   **dadurch gekennzeichnet, dass** der Sensor (24, 28) umfasst:

   eine Strahlungsquelle (34) zum Emittieren modulierter elektromagnetischer Strahlung (26, 30; 36, 40), insbesondere Licht,

   eine Empfängervorrichtung zum Empfangen elektromagnetischer Strahlung (46), welche von einem Objekt (44) in dem Beobachtungsbereich reflektiert wird,

   eine optische Vorrichtung (48) zur Bildgebung der reflektierten elektromagnetischen Strahlung (46) auf der Empfängervorrichtung und

   Sensorbildverarbeitungsmittel (52),

   wobei die Empfängervorrichtung eine Matrix mit einer Mehrzahl von Zeilen und einer Mehrzahl von Spalten von Empfängern (50-1, 50-2, 50-3) umfasst und

   wobei die Sensorbildverarbeitungsmittel (52) angeordnet sind, um für jeden der Empfänger einen Phasenunterschied zwischen der emittierten elektromagnetischen Strahlung (40) und der reflektierten elektromagnetischen Strahlung (46) zu bestimmen, um einen Abstand vom Empfänger (50-1, 50-2, 50-3) zum Objekt (44) zu berechnen, wobei der Sensor (24, 28) angeordnet ist, um die Vielzahl von Unterobjekten zu unterscheiden, wenn das Objekt (44) in dem Beobachtungsbereich eine Vielzahl von Unterobjekten umfasst, wobei die Sensorbildverarbeitungsmittel (52) angeordnet sind, um einen gegenseitigen Abstand zwischen zwei der Vielzahl von Unterobjekten zu bestimmen.

2. Melkvorrichtung (1; 80) nach Anspruch 1,
   wobei die Sensorbildverarbeitungsmittel (52) angeordnet sind, um ein dreidimensionales Bild des Beobachtungsbereichs, insbesondere eines Objekts (44) darin, zu bilden.

3. Melkvorrichtung (1; 80) nach Anspruch 2,
   wobei die Sensorbildverarbeitungsmittel (52) angeordnet sind, um wiederholt ein dreidimensionales Bild des Beobachtungsbereichs, insbesondere eines Objekts (44) darin, zu bilden.

4. Melkvorrichtung (1; 80) nach einem der vorhergehenden Ansprüche,
   wobei eine Wellenlänge der Amplitudenmodulation des emittierten Lichts (36, 40) zwischen 1 mm und 5 m beträgt.

5. Melkvorrichtung (1; 80) nach einem der vorhergehenden Ansprüche,
   wobei eine Wellenlänge der Amplitudenmodulation der emittierten Strahlung einstellbar, insbesondere schaltbar zwischen wenigstens zwei Werten ist.

6. Melkvorrichtung (1; 80) nach einem der vorhergehenden Ansprüche,
   wobei die Strahlungsquelle (34) Strahlung (26, 30; 36, 40) in einer gepulsten Weise emittiert, vorzugsweise mit einer Impulsfrequenz zwischen 1 Hz und 100 Hz.

7. Melkvorrichtung (1; 80) nach einem der vorhergehenden Ansprüche,
   wobei die Strahlungsquelle (34) eine einstellbare Lichtintensität und/oder einen einstellbaren Strahlungswinkel aufweist.

8. Melkvorrichtung (1; 80) nach einem der vorhergehenden Ansprüche,
   wobei die Empfängervorrichtung und vorteilhafterweise auch die Strahlungsquelle (34) drehbar angeordnet sind.

9. Melkvorrichtung (1; 80) nach einem der vorhergehenden Ansprüche,
   wobei der Sensor (24, 28) Empfänger (50-1, 50-2, 50-3) umfasst, welche auf solche Weise positioniert sind, dass der Sensor (24, 28) einen Beobachtungsbereich mit einem Blickwinkel von wenigstens 180°, vorzugsweise im Wesentlichen von 360°, aufweist.

10. Melkvorrichtung (1; 80) nach einem der vorhergehenden Ansprüche,
wobei der Blickwinkel des Beobachtungsbereichs des Sensors (24, 28) einstellbar ist.

11. Melkvorrichtung (1; 80) nach einem der vorhergehenden Ansprüche,
wobei wenigstens ein Teil des Sensors (24, 28), insbesondere eine Strahlungsquelle (34) und/oder die Empfängervorrichtung, elastisch am Rahmen (10) abgestützt ist.

12. Melkvorrichtung (1; 80) nach einem der vorhergehenden Ansprüche,
wobei die Navigationsmittel wirksam mit dem Sensor (24, 28), insbesondere mit den Sensorbildverarbeitungsmitteln (52), verbunden sind.

13. Melkvorrichtung (1; 80) nach einem der vorhergehenden Ansprüche,
wobei die Navigationsmittel den Sensor (24, 28) umfassen.

14. Melkvorrichtung (1; 80) nach einem der vorhergehenden Ansprüche,
wobei die Sensorbildverarbeitungsmittel (52) angeordnet sind, um wenigstens eines von folgenden zu erkennen: einen Zitzenbecher (22), ein Euter (60), eine Zitze (62-1, 62-2) und ein Bein des Milchtieres.

15. Melkvorrichtung (1; 80) nach Anspruch 14,
wobei die Sensorbildverarbeitungsmittel (52) angeordnet sind, um einen Abstand vom Sensor (24, 28) zu einem Bein eines Milchtieres, insbesondere einem hinteren Bein einer Kuh (72), zu bestimmen.

16. Melkvorrichtung (1; 80) nach Anspruch 1 ,
wobei die Sensorbildverarbeitungsmittel (52) angeordnet sind, um aus einem Bild des Beobachtungsbereichs die Position und/oder den gegenseitigen Abstand zwischen dem Zitzenbecher (22) und der Zitze (62) zu berechnen, und wobei die Robotersteuermittel angeordnet sind, um den Melkroboter auf der Grundlage der berechneten Position und/oder des gegenseitigen Abstands zu steuern.

17. Melkvorrichtung (1; 80) nach einem der Ansprüche 1, 15 oder 16,
wobei die Sensorbildverarbeitungsmittel (52) angeordnet sind, um wiederholt aus einem Bild des Beobachtungsbereichs die Position und/oder den gegenseitigen Abstand zwischen der Zitze und dem Zitzenbecher (22) zu bestimmen.

18. Melkvorrichtung (1; 80) nach Anspruch 17,
wobei die Sensorbildverarbeitungsmittel (52) angeordnet sind, um aus einer Veränderung der Position und/oder dem gegenseitigen Abstand die Geschwindigkeit des Zitzenbechers relativ zur Zitze zu berechnen, und wobei die Robotersteuermittel angeordnet sind, um den Melkroboter auf der Grundlage der berechneten Geschwindigkeit zu steuern.

19. Melkvorrichtung (1; 80) nach einem der Ansprüche 1, 15 bis 18,
wobei die Robotersteuermittel angeordnet sind, um den gegenseitigen Abstand zwischen der Zitze (62-1, 62-2) und dem Zitzenbecher (22) zu steuern und/oder zu minimieren.

20. Melkvorrichtung (1; 80) nach einem der vorhergehenden Ansprüche,
wobei die Melkvorrichtung (1; 80) für Milchtiererkennung ausgelegt ist.

21. Melkvorrichtung (1; 80) nach einem der vorhergehenden Ansprüche,
des Weiteren umfassend eine Reinigungsvorrichtung, wobei die Robotersteuermittel ausgelegt sind, um die Reinigungsvorrichtung zu steuern, um ein Euter (60) und/oder wenigstens eine Zitze (62-1, 62-2) des Milchtieres (72) auf der Grundlage eines Bildes des Euters und/oder der Zitze des Milchtieres und/oder auf der Grundlage eines Bildes der Reinigungsbürsten zu steuern.

22. Melkvorrichtung (1; 80) nach einem der vorhergehenden Ansprüche,
des Weiteren umfassend wenigstens eines von folgenden, einen Anschluss zur Stromversorgung, einen Anschluss für den Melkertrag, einen Anschluss zum Ausstoß von Abfall, insbesondere Abfallflüssigkeit, noch spezieller von zurückgewiesener Milch, verbrauchter Waschflüssigkeit und/oder Desinfektionsflüssigkeit, einen Anschluss für eine Flüssigkeit, insbesondere eine Waschflüssigkeit oder Desinfektionsflüssigkeit, wobei die Sensorbildverarbeitungsmittel (52) angeordnet sind, um den Anschluss mit einem Gegenanschluss für diese Verbindung zu koppeln durch Erkennen des Anschlusses und des Gegenanschlusses und durch Minimieren des gegenseitigen Abstands zwischen dem Anschluss und dem Gegenanschluss.

23. Melksystem (68), umfassend wenigstens einen Melkstand und eine Mehrzahl von selbstfahrenden Melkvorrichtungen (1; 80) nach einem der vorhergehenden Ansprüche.

24. Melksystem (68) nach Anspruch 23,
wobei jede Melkvorrichtung (1; 80) eine Empfängervorrichtung, welche für elektromagnetische Strahlung (26, 30; 36, 40) mit einer eigenen Frequenz, die keine Pulsfrequenz ist, empfangsbereit ist, und vorteilhafterweise eine Lichtquelle (34) umfasst, welche in der Lage ist, elektromagnetische Strahlung (26, 30; 36, 40) mit jener eigenen Frequenz zu emittieren.

25. Melksystem nach Anspruch 23 oder 24,
des Weiteren umfassend einen Master und einen oder mehrere Slaves, die von dem Master gesteuert werden, insbesondere von dem Master synchronisiert werden.

26. Melksystem nach einem der Ansprüche 23 bis 25,
wobei die Melkvorrichtungen (1; 80) die elektromagnetische Strahlung (26, 30; 36, 40) in Pulsen mit einem dazwischen liegenden Unterbrechungsfenster emittieren, wobei jede Melkvorrichtung einen Impuls während des jeweiligen Unterbrechungsfensters der anderen Melkvorrichtungen (1; 80) emittiert.

27. Melksystem nach einem der Ansprüche 23 bis 26, umfassend eine Mehrzahl von selbstfahrenden Melkvorrichtungen nach Anspruch 22,
wobei das System des Weiteren einen Gegenanschluss für den Anschluss und insbesondere auch wenigstens einen Behälter für eine Flüssigkeit umfasst, insbesondere für eine Waschflüssigkeit oder Desinfektionsflüssigkeit, für Milch oder Abfall, insbesondere für eine Abfallflüssigkeit, noch spezieller für zurückgewiesene Milch, verbrauchte Waschflüssigkeit und/oder Desinfektionsflüssigkeit.


**Revendications**

1. Machine de traite (1 ; 80) automotrice pour la traite automatique d'un animal laitier, tel qu'une vache (72), comprenant un châssis (10), sur lequel sont disposés
des moyens de propulsion (12, 14),
des moyens de navigation,
un capteur (24, 28) pour former une image d'une zone d'observation, telle qu'une partie de l'animal laitier, par exemple un trayon (62-1, 62-2), et
un robot de traite avec au moins un gobelet trayeur (22) et avec des moyens de commande de robot (16) pour fixer automatiquement le gobelet trayeur à un trayon, dans lequel les moyens de commande de robot (16) sont connectés fonctionnellement au capteur (24, 28),
**caractérisée en ce que** le capteur (24, 28) comprend :

une source de rayonnement (34) pour émettre un rayonnement électromagnétique modulé (26, 30 ; 36, 40), en particulier une lumière,
un dispositif récepteur pour recevoir un rayonnement électromagnétique (46) réfléchi par un objet (44) dans la zone d'observation,
un dispositif optique (48) pour représenter par image le rayonnement électromagnétique (46) réfléchi sur le dispositif récepteur, et
des moyens de traitement d'image de capteur (52),
dans laquelle le dispositif récepteur comprend une matrice avec une pluralité de lignes et une pluralité de colonnes de récepteurs (50-1, 50-2, 50-3), et
les moyens de traitement d'image de capteur (52) sont agencés pour déterminer pour chacun des récepteurs une différence de phase entre le rayonnement électromagnétique émis (40) et le rayonnement électromagnétique (46) réfléchi afin de calculer une distance du récepteur (50-1, 50-2, 50-3) à l'objet (44), dans laquelle le capteur (24, 28) est agencé pour différencier la pluralité de sous-objets si l'objet (44) dans la zone d'observation comprend une pluralité de sous-objets, dans laquelle les moyens de traitement d'image de capteur (52) sont agencés pour déterminer une distance mutuelle entre deux de la pluralité de sous-objets.

2. Machine de traite (1 ; 80) selon la revendication 1, dans laquelle les moyens de traitement d'image de capteur (52) sont agencés pour former une image en trois dimensions de la zone d'observation, en particulier d'un objet (44) à l'intérieur de celle-ci.

3. Machine de traite (1 ; 80) selon la revendication 2, dans laquelle les moyens de traitement d'image de capteur (52) sont agencés pour déterminer à plusieurs reprises une image de la zone d'observation, en particulier d'un objet (44) à l'intérieur de celle-ci .

4. Machine de traite (1 ; 80) selon l'une quelconque des revendications précédentes, dans laquelle une longueur d'onde de la modulation d'amplitude de la lumière émise (36, 40) est entre 1 mm et 5 m.

5. Machine de traite (1 ; 80) selon l'une quelconque des revendications précédentes, dans laquelle une longueur d'onde de la modulation d'amplitude du rayonnement émis est réglable, en particulier commutable entre au moins deux valeurs.

6. Machine de traite (1 ; 80) selon l'une quelconque des revendications précédentes, dans laquelle la source de rayonnement (34) émet un rayonnement (26, 30 ; 36, 40) d'une manière pulsée, de préférence avec une fréquence d'impulsions entre 1 Hz et 100 Hz.

7. Machine de traite (1 ; 80) selon l'une quelconque des revendications précédentes, dans laquelle la source de rayonnement (34) a une intensité lumineuse réglable et/ou un angle de rayonnement réglable.

8. Machine de traite (1 ; 80) selon l'une quelconque des revendications précédentes, dans laquelle le dispositif récepteur, et avantageusement également la source de rayonnement (34), est disposé de manière rotative.

9. Machine de traite (1 ; 80) selon l'une quelconque des revendications précédentes, dans laquelle le capteur (24, 28) comprend des récepteurs (50-1, 50-2, 50-3) qui sont positionnés de telle manière que le capteur (24, 28) ait une zone d'observation avec un angle de vue d'au moins 180°, de préférence de sensiblement 360°.

10. Machine de traite (1 ; 80) selon l'une quelconque des revendications précédentes, dans laquelle un angle de vue de la zone d'observation du capteur (24, 28) est réglable.

11. Machine de traite (1 ; 80) selon l'une quelconque des revendications précédentes, dans laquelle au moins une partie du capteur (24, 28), en particulier une source de rayonnement (34) et/ou le dispositif récepteur, est suspendu élastiquement à partir du châssis (10).

12. Machine de traite (1 ; 80) selon l'une quelconque des revendications précédentes, dans laquelle les moyens de navigation sont connectés fonctionnellement au capteur (24, 28), en particulier aux moyens de traitement d'image de capteur (52).

13. Machine de traite (1 ; 80) selon l'une quelconque des revendications précédentes, dans laquelle les moyens de navigation comprennent le capteur (24, 28).

14. Machine de traite (1 ; 80) selon l'une quelconque des revendications précédentes, dans laquelle les moyens de traitement d'image de capteur (52) sont agencés pour reconnaître au moins un parmi un gobelet trayeur (22), un pis (60), un trayon (62-1, 62-2) et une patte de l'animal laitier.

15. Machine de traite (1 ; 80) selon la revendication 14, dans laquelle les moyens de traitement d'image de capteur (52) sont agencés pour déterminer une distance du capteur (24, 28) à une patte d'un animal laitier, en particulier une patte arrière d'une vache (72).

16. Machine de traite (1 ; 80) selon la revendication 1, dans laquelle les moyens de traitement d'image de capteur (52) sont agencés pour calculer, à partir d'une image de la zone d'observation, la position et/ou la distance mutuelle entre le gobelet trayeur (22) et le trayon (62), et les moyens de commande de robot sont agencés pour commander le robot de traite sur la base de la position calculée et/ou la distance mutuelle.

**17.** Machine de traite (1 ; 80) selon l'une quelconque des revendications 1, 15 ou 16, dans laquelle les moyens de traitement d'image de capteur (52) sont agencés pour déterminer à plusieurs reprises, à partir d'une image de la zone d'observation, une position et/ou une distance mutuelle du trayon et du gobelet trayeur (22).

**18.** Machine de traite (1 ; 80) selon la revendication 17, dans laquelle les moyens de traitement d'image de capteur (52) sont agencés pour calculer, à partir d'un changement de la position et/ou de la distance mutuelle, la vitesse du gobelet trayeur par rapport au trayon, et dans laquelle les moyens de commande de robot sont agencés pour commander le robot de traite sur la base de la vitesse calculée.

**19.** Machine de traite (1 ; 80) selon l'une quelconque des revendications 1, 15 à 18, dans laquelle les moyens de commande de robot sont agencés pour commander et/ou pour minimiser la distance mutuelle entre le trayon (62-1, 62-2) et le gobelet trayeur (22).

**20.** Machine de traite (1 ; 80) selon l'une quelconque des revendications précédentes, dans laquelle la machine de traite (1 ; 80) est agencée pour la reconnaissance d'animaux laitiers.

**21.** Machine de traite (1 ; 80) selon l'une quelconque des revendications précédentes, comprenant en outre un dispositif de nettoyage, dans laquelle les moyens de commande de robot sont agencés pour commander le dispositif de nettoyage afin de nettoyer un pis (60) et/ou au moins un trayon (62-1, 62-2) de l'animal laitier (72) sur la base d'une image du pis et/ou trayon et/ou sur la base d'une image des brosses de nettoyage.

**22.** Machine de traite (1 ; 80) selon l'une quelconque des revendications précédentes, comprenant en outre au moins une parmi une connexion pour l'alimentation électrique, une connexion pour le rendement de lait, une connexion pour la décharge de déchets, en particulier d'un déchet liquide, plus particulièrement de lait rejeté, liquide de lavage et/ou de désinfection utilisé, et une connexion pour un liquide, en particulier un liquide de lavage ou de désinfection, dans laquelle les moyens de traitement d'image de capteur (52) sont agencés pour coupler la connexion à un coupleur de connexion , en reconnaissant la connexion et le couplage et minimisant la distance mutuelle entre la connexion et le couplage.

**23.** Système de traite (68) comprenant au moins une salle de traite et une pluralité de machines de traite automotrices (1 ; 80) selon 1"une quelconque des revendications précédentes.

**24.** Système de traite (68) selon la revendication 23, dans lequel chaque machine de traite (1 ; 80) comprend un dispositif récepteur qui est sensible à un rayonnement électromagnétique (26, 30 ; 36, 40) avec une fréquence propre, n'étant pas une fréquence d'impulsions, et avantageusement également une source de lumière (34) qui est capable d'émettre un rayonnement électromagnétique (26, 30 ; 36, 40) avec cette fréquence propre.

**25.** Système de traite selon la revendication 23 ou 24, comprenant en outre un maître et un ou plusieurs esclaves qui sont commandés par le maître, en particulier synchronisés par le maître.

**26.** Système de traite selon l'une quelconque des revendications 23 à 25, dans lequel les machines de traite automotrices (1 ; 80) émettent le rayonnement électromagnétique (26, 30 ; 36, 40) par impulsions avec une fenêtre de pause entre elles, dans lequel chaque machine de traite émet une impulsion durant des fenêtres de pause respectives des autres machines de traite (1 ; 80).

**27.** Système de traite selon 1"une quelconque des revendications 23 à 26, comprenant une pluralité de machines de traite automotrices selon la revendication 22, dans lequel le système comprend en outre une connexion complémentaire pour la connexion, et en particulier également au moins un récipient pour un liquide, en particulier un liquide de lavage ou de désinfection, du lait ou des déchets, en particulier un déchet liquide, plus particulièrement du lait rejeté, un liquide de lavage et/ou de désinfection utilisé.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1024522
- EP 1523882 A
- EP 0360354 A1
- EP 0862360 A
- EP 1442657 A